# EUROPEAN PATENT APPLICATION

(11) **EP 0 989 498 A2**
(43) Date of publication of application: **29.03.2000**
(21) Application number: 99114105.2
(22) Date of filing: 16.07.1999
(51) Int. Cl.: G06F 13/36

(54) **Communication method and communication control device for a spinning machine**

(30) Priority: 27.08.1998 JP 24170898
(71) Applicant: Kabushiki Kaisha Toyoda Jidoshokki Seisakusho, Aichi-ken 448 (JP)
(72) Inventor: Shinozaki,Yutaka, Kariya-shi, Aichi-ken (JP)
(74) Representative: HOFFMANN - EITLE

(57) **Abstract**

A host control unit 3 and slave control units 2 are sequentially connected through a shift data line 4 in the form of a link. Shift data is outputted from the host control unit 3 to the slave control units 2 or from the slave control unit 2 on the upstream side to the slave control unit 2 on the downstream side. When the shift clock signal is inputted to the slave control unit 2 in a state that the shift data is inputted to the slave control unit 2, the slave control unit 2 judges to be in a state of serial-communicatable with the host control unit 3 and conducts serial communication with the host control unit 3. Also, the shift data is outputted from the slave control unit 2. When a succeeding shift clock signal is inputted in a state that the shift data is outputted from the slave control unit 2, the output of the shift data is suspended.

## Description

### BACKGROUND OF THE INVENTION

### 1. Field of the Invention

The present invention relates to a communication method and a communication control device for a spinning machine, and more particularly to a communication method and a communication control device between one host control unit and multiple slave control units.

### 2. Description of the Related Art

Conventionally, a spinning frame is so designed as to control the operation of each machine on the basis of data related to the spinning states of multiple spinning units by using a main control unit. The multiple spinning units are divided into a plurality of groups, and a control section in each group is connected to the main control unit through a communication line so that the respective control sections are subjected to polling by the main control unit to collect data (for example, Japanese Patent Unexamined Publication No. Hei 5-78925).

On the other hand, in a spinning machine such as a single-spindle drive type ring spinning frame having a spindle drive motor for each spindle, there is required that a spindle drive system and a draft part drive system are driven by different motors, respectively, and the drive control is conducted so that the respective drive systems are synchronous with each other. In addition, in order to reduce the load on the main control unit, a control unit for controlling each spindle on the basis of an instruction from the main control unit is provided for each spindle.

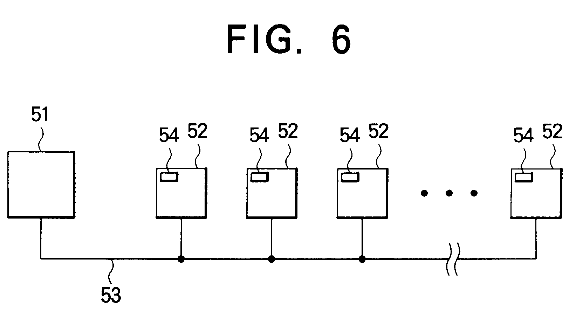

In the spinning frame, because the number of spindles per each machine is large to the degree of about 500 to 1000, not parallel communication but serial communication is employed for transmission of data between the main control unit and the respective control sections or the respective control units. For example, as shown in Fig. 6, a host control unit 51 (main control unit) and the respective slave control units 52 (the respective control sections or the respective control units) are connected to each other through a multidrop serial communication line 53. Each of the slave control units 52 is provided with a switch 54 for setting an address. For example, a dip switch of 8 bits or 9 bits is used for the switch 54, and the respective switches 54 are set in the order of, for example, 1, 2, 3, ..., n, and the respective different addresses are set on the respective slave control units 52.

However, in the case where there are provided about 1000 slave control units as in the single-spindle drive type spinning frame, the costs of the switches 54 for address setting are caused to considerably increase. Also, because the addresses setting is conducted by operating the 9-bit dip switches by an operator one by one, it takes troublesomeness to set the addresses, and a setting error is liable to occur.

### SUMMARY OF THE INVENTION

The present invention is made to solve the above problems with the related art, and therefore a primary object of the present invention is to provide a communication method with which a host control unit can selectively conduct serial communication with the respective slave control units even if the respective addresses are not set on the slave control units.

Also a secondary object of the present invention is to provide a communication control unit for implementing the above communication method.

In order to achieve the above primary object, according to one aspect of the present invention, there is provided a communication method for a spinning machine having a host control unit and a plurality of slave control units, wherein a shift data line sequentially connects the host control unit and the plurality of slave control units in the form of a link, a serial communication line that connects the host control unit and the respective slave control units by a bus; and wherein each of the respective slave control units outputs shift data to the slave control unit or the host control unit on the downstream side on the basis of a shift signal inputted through a signal line connected to the host control unit by a bus in a state that the shift data is outputted from the host control unit or the slave control unit, on the upstream side, connected through the shift data line, and judges to be in a state of serial- communicatable with the host control unit and conducts serial communication with the host control unit.

In order to achieve the above secondary object, according to another aspect of the present invention, there is provided a communication control unit for a spinning machine having a host control unit and a plurality of slave control units which comprises a shift data line connecting the host control unit and the plurality of slave control units in the form of a link; a shift clock line connecting the host control unit and the plurality of slave control units by a bus; a serial communication line connecting the host control unit and the plurality of slave control units by a bus; a shift clock output means disposed in the host control unit; a host shift data output means disposed in the host control unit for outputting the shift data to one of the plurality of slave control units; a slave shift data output means disposed in each of the slave control units for outputting the shift data to the slave control unit or the host control unit on the downstream side on the basis of the shift clock signal inputted through the shift clock line in a state that the shift data is outputted from the host control unit or the slave control unit on the upstream side, and suspends the output of the shift data on the basis of the shift clock signal succeedingly inputted; a judging means disposed in each of the slave control units for judging whether a respective slave contorl unit is in serial-communicatable with the host control unit if the shift clock signal is inputted when the shift data is outputted from the control unit on the upstream side.

According to still another aspect of the present invention, there is provided a communication control unit for a spinning machine, wherein each of the slave control units comprises a control unit disposed in each of spindles of a spinning frame.

According to a further aspect of the present invention, there is provided a communication control unit for a spinning machine, wherein the spinning frame comprises a single-spindle drive type spinning frame in which a spindle drive motor is disposed independently in each of the spindles.

According to a still further aspect of the present invention, there is provided a communication control unit for a spinning machine, wherein the spinning frame is designed such that multiple spinning units are divided into a plurality of groups, and a sub-control unit is disposed in each group, and the sub-control unit in each group communicates with the slave control unit disposed in each of the spindles as the host control unit, and the main control unit communicates with the respective sub-control units.

Accordingly, in one aspect of the present invention, shift data is inputted to one slave control unit from the host control unit or another slave control unit on the upstream side of the one slave control unit through the shift data line. When shift signal is inputted to one slave control unit from the host control unit in a state that the shift data is inputted to the one slave control unit, the shift data is outputted to another slave control unit or the host control unit on the downstream side of the one slave control unit on the basis of the shift signal. Also, when the shift signal is inputted to the slave control unit in a state that the shift data is inputted to the slave control unit, it is judged that the slave control unit is in a state that it is serial-communicatable with the host control unit, and serial communication is conducted between the slave control unit and the host control unit. That is, even if the respective addresses are not set on the respective slave control units, the host control unit can conduct serial communication between the respective slave control units.

Also, in another aspect of the present invention, shift data is inputted to one slave control unit from the host control unit or another slave control unit on the upstream side of the one slave control unit through the shift data line. When a shift clock signal is inputted to the one slave control unit from the host control unit through the shift clock line in a state that the shift data is inputted to the one slave control unit, the shift data is outputted to the slave control unit or the host control unit on the downstream side of the one slave control unit from the slave shift data output means of the one slave control unit on the basis of a shift clock signal. When the shift clock signal is inputted to the one slave control unit in a state that the shift data is inputted to the one slave control unit, a judging means in the one slave control unit judges that the one slave control unit can conduct serial communication with the host control unit, and serial communication is conducted between the one slave control unit and the host control unit through the serial communication line. When a succeeding shift clock signal is inputted to the one slave control unit in a state that the shift data is outputted from the slave shift data output means, the slave shift data output means suspends the output of shift data on the basis of the succeeding shift clock signal.

Further, in still another aspect of the present invention, each of the above slave control units is a control unit provided for each spindle of the spinning frame, and communication is conducted between the above control units and the main control unit (host control unit) as in the above manner.

Still further, in yet still another aspect of the present invention, the above spinning frame is a single-spindle drive type spinning frame, and each slave control unit mainly controls the spindle drive motor disposed in each spindle.

Yet still further, in yet still another aspect of the present invention, the spinning frame is so designed as to divide the multiple spinning units into a plurality of groups. A sub-control unit provided for each group functions as a host control unit of each group and conducts communication with the slave control unit disposed in each spindle. The main control unit conducts communication with each sub-control unit, and the slave control unit inputs instruction data or the like from the main control unit through the sub-control unit.

### BRIEF DESCRIPTION OF THE DRAWINGS

The novel features believed characteristic of the itself, however, as well as other features and advantages thereof, will be best understood by reference to the detailed description which follows, read in conjunction with the accompanying drawings, wherein:
Fig. 1 is a schematic structural diagram showing a communication system in accordance with a first embodiment of the present invention;
Fig. 2 is a timing chart showing the operation in accordance with the first embodiment;
Fig. 3 is a schematic structural diagram showing a communication system in accordance with a second embodiment of the present invention;
Fig. 4 is a timing chart showing the operation in accordance with a third embodiment of the present invention;
Fig. 5 is a schematic structural diagram showing a communication system in accordance with the third embodiment; and
Fig. 6 is a schematic structural diagram showing a conventional communication system.

### DETAILED DESCRIPTION OF THE PREFERRED EMBODIMENTS

Now, a description will be given in more detail of preferred embodiments of the present invention with reference to the accompanying drawings.

### First Embodiment

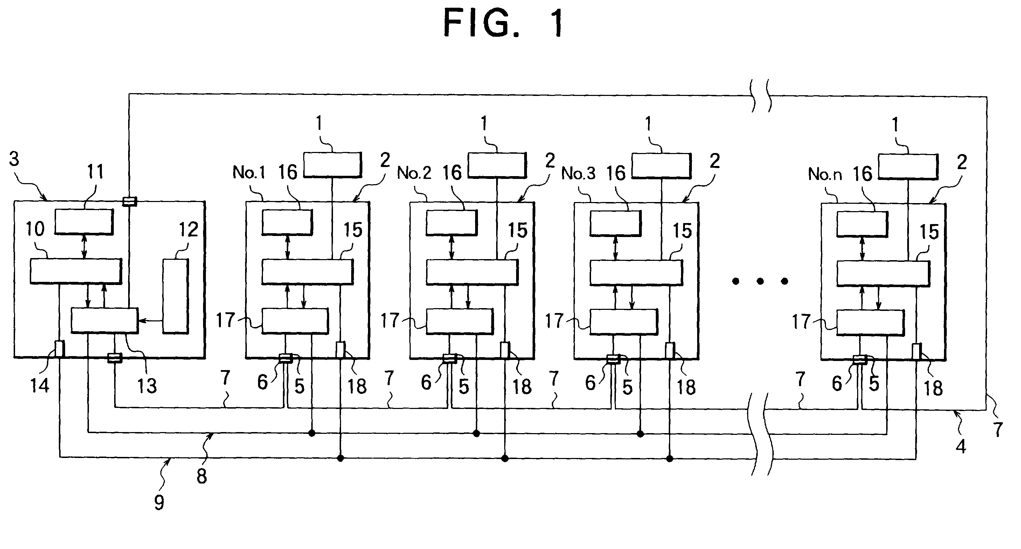

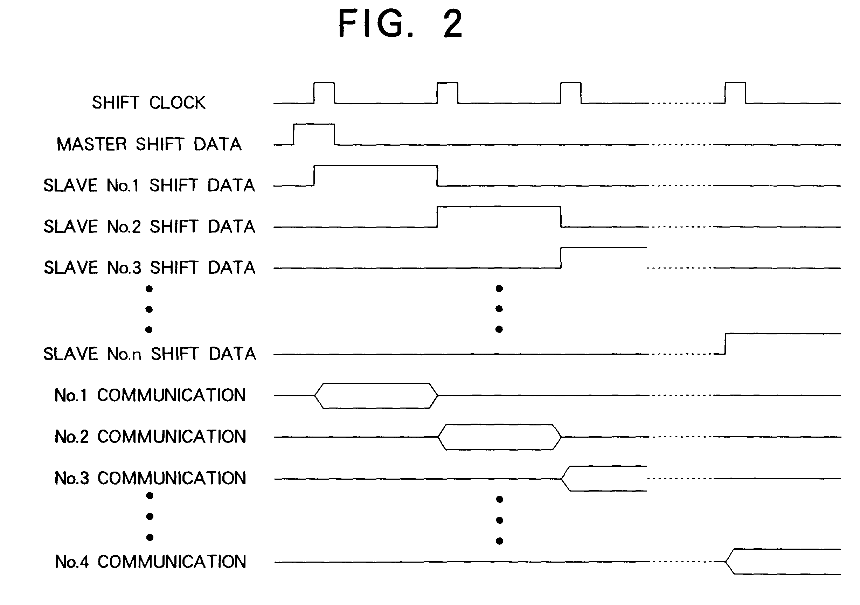

Hereinafter, a single-spindle drive type ring spinning frame according to a first embodiment of the present invention will be described with reference to Figs. 1 and 2.

Fig. 1 is a schematic structural diagram showing a communication system in accordance with a first embodiment of the present invention. As shown in Fig. 1, a single-spindle drive motor 1 disposed in each spindle as a spindle drive motor is connected to a slave control unit 2 disposed in each spindle, respectively. A main control unit 3 as a host control unit and a plurality of slave control units 2 are connected to each other in the form of a link through a shift data line 4. The shift data line 4 is formed of a cable 7 having connectors 6 which are disposed at given intervals and connected to the terminals of shift data input/output ports 5 disposed in the respective slave control units 2. The main control unit 3 and the plurality of slave control units 2 are connected to each other by a bus through a shift clock line 8. Also, the main control unit 3 and the plurality of slave control units 2 are connected by a bus through a serial communication line 9.

The main control unit 3 is comprised of a CPU (central processing unit) 10 constituting a shift clock output means and a host shift data output means, a memory unit 11, an input unit 12, an input/output interface 13 and a serial interface 14. The CPU 10 is connected to the shift data line 4 and the shift clock line 8 through the input/output interface 13. The CPU 10 is also connected to the serial communication line 9 through the serial interface 14.

The CPU 10 controls a motor of a draft unit and a motor of a lifting unit such as a link rail (not shown) on the basis of a spinning condition inputted by the input unit 12. The CPU 10 also transmits and receives various data through the serial communication line 9 with respect to the CPUs 15 of the respective slave control units 2. The various data includes a spinning condition, the operation state of each spindle, thread cut information, etc.

Each of the slave control units 2 includes a slave shift data output means, a CPU 15 constituting a judging means and a control means, a memory unit 16, an input/output interface 17 and a serial interface 18. Each of the CPUs 15 is connected to the shift data line 4 and the shift clock line 8 through the input/output interface 17. Each of the CPUs 15 is also connected to the serial communication line 9 through the serial interface 18.

Each of the CPU 15 outputs shift data to one slave control unit 2 or the main control unit 3 on the downstream side on the basis of a shift clock signal inputted through the shift clock line 8 in a state that the shift data is outputted from the main control unit 3 or another slave control unit 2 on the upstream side. Upon inputting the above shift clock signal, the CPU 15 judges to be in a state that the CPU 15 enables serial communication with the main control unit 3. Also, the CPU 15 suspends the output of the shift data on the basis of the inputted shift clock signal in a state that the CPU 15 outputs the shift data.

Each of the slave control unit 2 transmits and receives data through the serial communication line 9 with respect to the main control unit 3. The CPU 15 controls the single-spindle drive motor 1 on the basis of program data stored in the memory unit 16, an instruction signal from the main control unit 3, or the like.

Subsequently, the operation of the device thus structured will be described. Spinning conditions such as a fiber raw material, thread Nos. the number of twisting and a draft rate are inputted by the input unit 12 prior to the operation of the spinning frame. Upon starting the operation of the spinning frame, the CPU 10 of the main control unit 3 controls the motors in the draft unit and the lifting unit at a given speed in response to the spinning conditions on the basis of the inputted spinning conditions. The CPU 10 also communicates with the CPUs 15 of the respective slave control units 2 through the serial communication line 9, transmits control instruction data of the single-spindle drive motor 1 and collects data relating to the rotation state of the single-spindle drive motor 1, the occurrence state of thread cut and so on.

The CPU 15 of each the slave control unit 2 controls the single-spindle drive motor 1 on the basis of the control instruction data from the CPU 10 and stores the rotation state of the single-spindle drive motor 1 and the occurrence state of thread cut in the memory unit 16 on the basis of a detection signal from a sensor (not shown). Then, when the CPU 15 comes to a state where it can communicate with the main control unit 3, the CPU 15 transmits the data stored in the memory unit 16 to the CPU 10.

Subsequently, a communication method between the main control unit 3 and the respective slave control units 2 will be described.

Although addresses are not set on the respective slave control units 2, it is assumed that No. 1, No. 2, No. 3, ..., No. n are set on the respective slave control units 2 in the stated order from a side close to the main control unit 3 as a matter of convenience.

Fig. 2 is a timing chart showing the operation in accordance with this embodiment. As shown in Fig. 2, in an initial state, the respective slave control units 2 are made in a disable (invalid) state. In this state, the CPU 10 of the main control unit 3 outputs shift data to the slave control unit 2 of No. 1 and outputs a shift clock signal in a state that it outputs the shift data thereto. Upon inputting the shift clock signal in a state that the main control unit 3 outputs the shift data, the CPU 15 of the slave control unit 2 of No. 1 latches the shift data at the time of rising of the shift clock signal and outputs the shift data to a downstream slave control unit 2, that is, the slave control unit 2 of No. 2. Also, upon inputting the shift clock signal in a state that the main control unit 3 outputs the shift data, the CPU 15 of No. 1 judges to be in a state that it enables serial communication with the main control unit 3. The CPU 10 suspends the output of the shift data after a predetermined period of time. In this embodiment, the output of the shift data is suspended at the rising of the initial shift clock signal. When the CPU 10 outputs the shift clock signal from this state, the CPU 15 in the slave control unit 2 of No. 1 suspends the output of the shift data at the rising thereof. And, the CPU 15 of the slave control unit 2 of No. 2 inputs the shift clock signal in a state that the upstream slave control unit 2 outputs the shift data, latches the shift data at the time of rising of the shift clock signal and outputs the shift data to a downstream slave control unit 2, that is, the slave control unit 2 of No. 3. Also, upon inputting the shift clock signal in a state that the slave control unit 2 of No.1 outputs the shift data, the CPU 15 of No. 2 judges to be in a state that it enables serial communication with the main control unit 3.

In the following operation, likewise, the CPU 10 of the slave control unit 2 which outputs the shift data suspends the output of the shift data at the rising of the shift clock signal every time the CPU 10 outputs the shift clock signal. Also, upon inputting the shift clock signal, the CPU 15 of the slave control unit 2 on the downstream side of the slave control unit 2 that outputs the shift data latches the shift data at the rising of the shift clock signal and outputs the shift data to the downstream slave control unit 2. Further, upon inputting the shift clock signal in a state that the upstream slave control unit 2 outputs the shift data, the CPU 15 judges to be in a state that it enables serial communication with the main control unit 3.

On the other hand, the CPU 10 includes a counter (not shown) that counts the number of times of outputting the shift clock signals so as to confirm which slave control unit 2 is in a serial-communicatable state according to the count value of the counter. After the counter counts up to n equal to the number of the slave control units 2, it again counts from 1 since a succeeding shift clock signal is outputted. Therefore, because the count value of the counter is identical with the number of the slave control unit 2 which is in a state that it can communicate with the main control unit 3 at that time, the CPU 10 can confirm the slave control unit 2 in the serial-communicatable state according to the count value of the counter. In the above manner, the main control unit 3 outputs the shift clock signal, thereby sequentially polling the respective slave control units 2 of No. 1 to No. n and enabling communication with each other.

The shift clock signals are normally outputted at given intervals. However, in order that an operator knows the data relating to the rotation state of the single-spindle drive motor 1 of a specific spindle or the thread cut state, or in the case that only a specific spindle is suspended, there is required that only the spindle in question early comes to a communicatable state. In this case, the CPU 10 sequentially outputs the shift clock signals at the shortened intervals until the number of the slave control unit 2 corresponding to the spindle instructed by the operation of the input unit 12 is identical with the count value of the counter.

This embodiment leads to the following advantages.
(1) A shift register mechanism is utilized for confirmation that communication is enabled between the main control unit 3 and one of the plurality of slave control units 2. Accordingly, unless the individual addresses are set on the respective slave control units 2, the main control unit 3 can selectively conduct serial communication with the individual slave control units 2, resulting in no necessity of troublesome work of selling the addresses of the respective slave control units 2 by an operator.
(2) Because the main control unit 3 and the slave control units 2 disposed in the respective spindles can mutually transmit and receive data through serial communication, appropriate control can be conducted while the states of the respective spindles are grasped in the ring spinning frame which is large in the number of spindles.
(3) Because the main control unit 3 and the slave control units 2 disposed in the respective spindles can mutually transmit and receive data through serial communication, appropriate control can be conducted while the states of the respective spindles are grasped in the single-spindle drive type ring spinning frame which is large in the number of spindles and complicated in control.
(4) The shift data line 4 is formed of the cable 7 having connectors 6 which are disposed at given intervals and connected to the terminals of the shift data input/output ports 5 disposed in the respective slave control units 2. Accordingly, since the respective connectors 6 are connected to the terminals of the shift data input/output ports 5 of the respective slave control units 2 in order, the shift data line 4 can be assembled with the device without any error and simply.
(5) As the shift signal used when the slave control unit 2 on the downstream side outputs the shift data sequentially, the shift clock signal transmitted through the shift clock line 4 is used. Accordingly, an error is reduced as compared with the structure in which the shift signal is contained in a part of communication data.
(6) Although polling is conducted in the order from the slave control unit 2 side close to the main control unit 3, the output intervals of the shift clocks can be set freely. Accordingly, since the output intervals of the shift clocks giving communication permission to the slave control unit 2 that does not require communication are shortened, communication can be early conducted with a necessary slave control unit 2 with saving a vain time.
(7) Because the count value of the counter that counts the number of times of outputting the shift clocks is allowed to indicate the slave control unit 2 which is in a state that it enables serial communication with the main control unit 3 at the present time, the CPU 10 readily confirms the slave control unit 2 in the serial-communicatable state.

### Second Embodiment

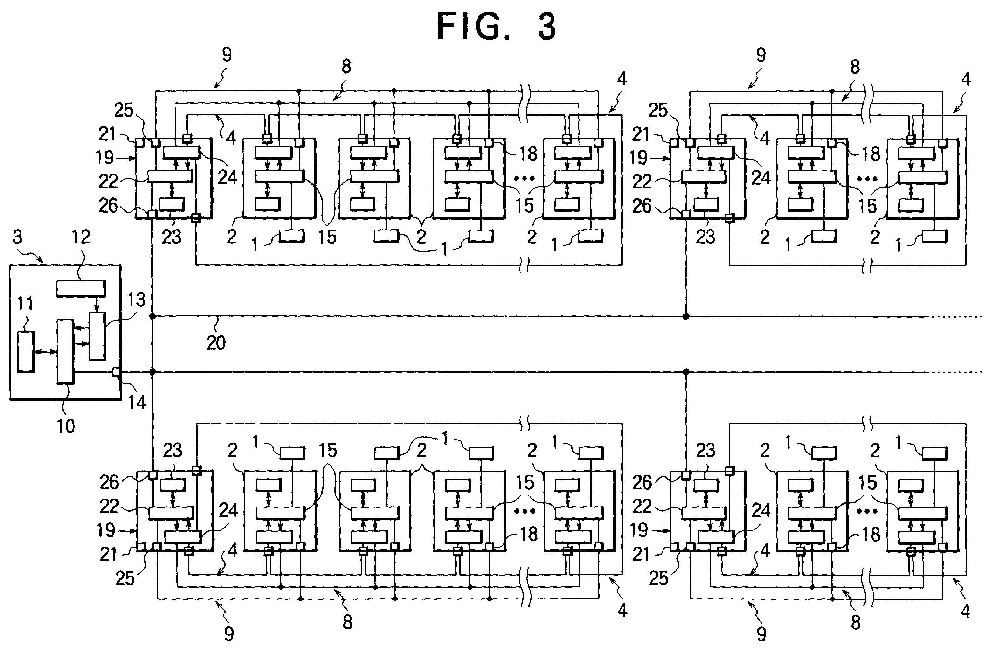

Subsequently, a second embodiment of the present invention will be described with reference to Fig. 3. Fig. 3 is a schematic structural diagram showing a communication system in accordance with the second embodiment of the present invention. This embodiment is largely different from the above-mentioned first embodiment in that multiple spinning units of a spinning frame are divided into a plurality of groups, and a sub-control unit is disposed in each of those groups, and the sub-control unit in each group functions as the host control unit. The same parts as those in the above-mentioned first embodiment are designated by identical symbols, and their detailed description will be omitted.

A spinning frame having 480 spindles at one side and 960 spindles at both sides has one group consisting of, for example, 48 spindles and a sub-control unit 19 as the host control unit in each of the groups. The respective sub-control units 19 are connected by a bus to the main control unit 3 through a serial communication line 20. Each of the sub-control units 19 has a switch 21 for an address setting by which a predetermined address is set on the sub-control unit 19, respectively. With this structure, the main control unit 3 and the respective sub-control units 19 can conduct serial communication with each other by specifying the addresses of the respective sub-control units 19. The number of the sub-control units 19 is 20 in total, and if the number thereof is to this degree, it takes little troublesome work to set the addresses. Also, if the right and left sides of the device are numbered from No. 1 to No. 10, respectively, the switch 21 may be formed of a switch of 4 bits.

Each of those sub-control units 19 includes a CPU 22 constituting a shift clock output means and a host shift data output means, a memory unit 23, an input/output interface 24 and a serial interface 25. The CPU 22 is connected to the shift data line 4 and the shift clock line 8 through the input/output interface 24. The CPU 22 is also connected to the serial communication line 9 through the serial interface 25 and to the serial communication line 20 through the serial interface 26, respectively.

The CPU 22 communicates with the main control unit 3 through the serial communication line 20 and also communicates with the respective slave control units 2 in each group through the serial communication line 9, thus intervening in the transfer of data between the main control unit 3 and the slave control units 2. The communication between the sub-control units 19 and the slave control units 2 is conducted in the same manner as the communication between the main control unit 3 and the slave control units 2 in the above-mentioned first embodiment. That is, the CPU 22 first outputs the shift data to the slave control unit 2 of No. 1 in each group and outputs the shift clock signal in a state that it outputs the shift data. Then, the CPU 22 sequentially comes to a state where it enables serial communication with the slave control units 2 of Nos. 1 to 48 since the CPU 22 outputs the shift clock signal.

In the structure where the main control unit 3 sequentially conducts serial communication with all of the slave control units 2 having 960 spindles, even if polling is sequentially conducted at 10 msec per one spindle, a period of time required for conducting polling on from the first slave control unit 2 to the final slave control unit 2 is 9600 msec, that is, 9.6 sec. However, in the case where polling is sequentially conducted on the slave control units 2 by the sub-control units 19 for each group, the period of time is 1/10 or shorter, and 1/20 in this embodiment.

Accordingly, this embodiment leads to the following advantages in addition to the above advantages (4) to (6) of the first embodiment.
(8) A shift register mechanism is utilized for confirmation that communication is enabled between the sub-control unit 19 and one of the plurality of slave control units 2. Accordingly, unless the individual addresses are set on the respective slave control units 2, the sub-control unit 19 can selectively conduct serial communication with the individual slave control units 2, resulting in no necessity of troublesome work of setting the addresses of the respective slave control units 2 by an operator.
(9) In a single-spindle drive type spinning frame which is large in the number of spindles, the main control unit 3 communicates with the respective sub-control units 19, and the sub-control unit 19 disposed in each group communicates with the slave control units 2 in each group. This structure can grasp the states of the respective spindles in a short time, and in this embodiment, communication is completed in a period of 1/20 as much as that in a case that the main control unit 3 sequentially conducts serial communication with all of the slave control units 2, thus making it possible to conduct appropriate control while grasping the states of the respective spindles.

### Third Embodiment

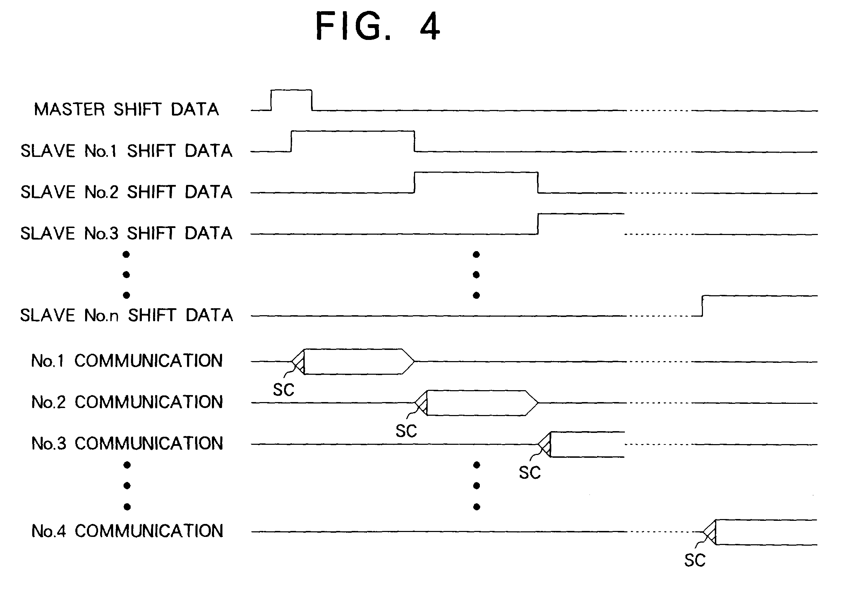

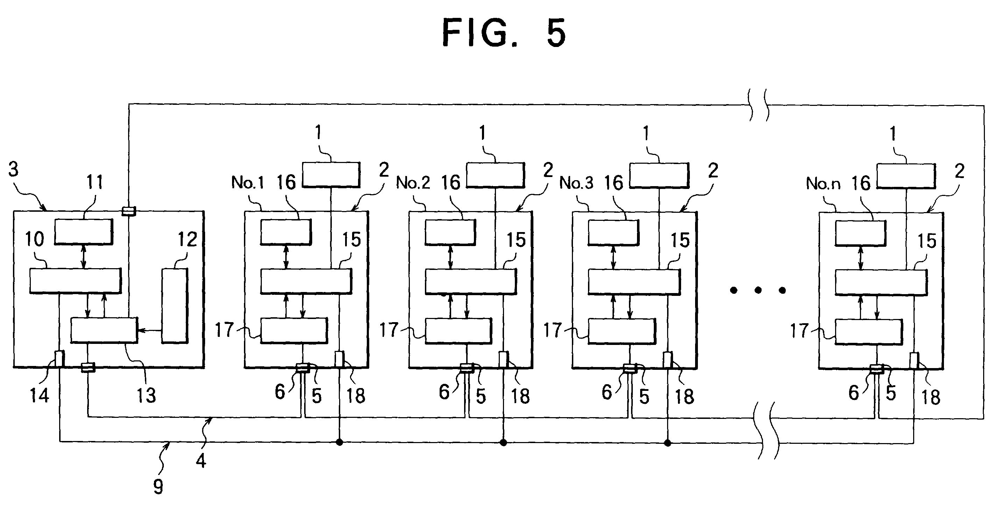

Subsequently, a third embodiment of the present invention will be described with reference to Figs. 4 and 5.

Fig. 5 is a schematic structural diagram showing a communication system in accordance with the third embodiment. As shown in Fig. 5, this embodiment is largely different from the above-mentioned first and second embodiments in that the shift clock line 8 is omitted. Other structures are identical with those in the first embodiment, the same parts are designated by identical symbols, and their detailed description will be omitted.

In this embodiment, the CPU 10 functions as a shift code giving means that gives a shift code SC corresponding to the shift clock to the initial portion of transmission data which is transmitted to the serial communication line 9 instead of a function of the shift clock output means. Fig. 4 is a timing chart showing the operation in accordance with this embodiment. As shown in Fig. 4, after outputting shift data, in order to first conduct serial communication with the slave control unit 2 of No. 1 the CPU 10 outputs communication data with respect to the slave control unit 2 of No. 1 to the serial communication line 9. Then, the CPU 10 gives the shift code SC irrelevant to the communication data body to the initial portion of the communication data. Thereafter, in the case where the CPU 10 conducts serial communication with the slave control unit 2 of No. 2, it outputs the communication data with respect to the slave control unit 2 of No. 2, to the initial portion of which the shift code SC is given. Sequentially, the CPU 10 outputs the communication data with respect to the slave control unit 2 of No. i to the initial portion of which the shift code SC is given to the serial communication line 9.

On the other hand, the CPU 15 disposed in each of the slave control units 2 outputs the shift data on the basis of the shift code SC inputted through the serial communication line 9 in a state that the shift data is outputted from the main control unit 3 or the slave control unit 2 on the upstream side. Also, the CPU 15 judges to be in a state that it enables serial communication with the main control unit 3 at this time (in a state that the communication right is obtained). Also, when the CPU 15 inputs the shift code SC in a state that it outputs the shift data, the CPU 15 judges that the communication right with the main control unit 3 are moved to another and suspends the output of the shift data.

Accordingly, this embodiment requires no shift clock line 8 and becomes simple in structure of the hardware as much in addition to substantially the same advantages of those in the first embodiment.

Incidentally, the present embodiment is not limited to the above embodiment, for example, may be embodied as follows.

In the first and second embodiments, that the CPU 10 suspends the output of the shift data may be executed at the rising of the shift clock signal.

In the first and second embodiments, to suspend the output of the shift data from the CPU 15 on the respective slave control units 2 may be executed at the falling of the shift clock signal.

In the second embodiment, the shift clock line is omitted, and the shift code SC may be utilized for confirming that the respective slave control units 2 are in a serial-communicatable state as in the third embodiment.

In the case that the spinning units are divided into a plurality of groups, they may be divided at the right and left sides of the spinning frame, or the number of spindles contained in each group may be larger or smaller than 48. Also, the number of spindles contained in each group may not be identical with that in another group. That is, it is unnecessary to set the number of spindles at a divisor of the total number of spindles. For example, in the case where 480 spindles are provided at one side, the number of spindles in one groups is set at 30 whereas the number of spindles in each of other groups is set at 50.

In the case that the sub-control units 19 are provided as in the second embodiment, the shift register mechanism is employed for confirming a communicatable state in not only serial communication between the sub-control units 19 and the slave control units 2 but also serial communication between the main control unit 3 and the sub-control units 19. That is, in a relation between the main control unit 3 and the sub-control units 19, the main control unit 3 is used as the host control unit whereas the sub-control units 19 are used as the slave control units. In this case, it is unnecessary to set the addresses on the respective control units that communicate with the main control unit as in the first embodiment.

It may be structured that the output intervals of the shift clocks are made constant, and an elapsed time since an initial shift clock signal is outputted is measured by a timer so that a slave control unit 2 which is in a state that it enables serial communication with the main control unit 3 at the present time is confirmed by the period of time measured by the timer. Similarly, in this case, the CPU 10 readily confirms the slave control unit 2 in a serial-communicatable state.

The above structure is applied to not only the single-spindle drive type ring spinning frame but also the ring spinning frame of the type that drives all the spindles by one or a plurality of drive motors. In this case, the slave control unit 2 disposed in each spindle is used for controlling a thread patching unit or the like disposed in each spindle. Also, the present invention is not limited to the ring spinning frame but may be applied to an open end spinning frame or a ring twisting machine of the single-spindle drive type.

The present invention may be applied to not only the communication between the host control unit and the slave control units in one spinning frame but also the communication between a host computer that monitors the running state of a plurality of spinning frames and computers disposed in the respective spinning frames. In this case, the host computer functions as the host control unit whereas the computers in the respective spinning frames functions as the slave control units.

The invention (technical concept) which can be understood from the above embodiments other than the claimed invention will be described together with the advantages thereof.
(1) In a communication control unit in the above spinning machine, the shift data line is formed of a cable having connectors which are disposed at given intervals and connected to the terminals of shift data input/output ports disposed in the respective slave control units.
   In this case, since the respective connectors are connected to the terminals of the shift data input/output ports of the respective slave control units in order, the shift data line can be assembled with the device without any error and simply.
(2) A communication control unit for a spinning machine having a host control unit and a plurality of slave control units, comprising: a shift data line connecting the host control unit and the plurality of slave control units in the form of a link; a serial communication line that connects the host control unit and the plurality of slave control units by a bus; a host shift data output means disposed in the host control unit; a shift code giving means disposed in the host control unit for giving a shift code to an initial portion of transmission data transmitted to the serial communication line; a slave shift data output means disposed in each of the slave control units for outputting the shift data to the slave control unit or the host control unit on the downstream side on the basis of the shift code inputted through the serial communication line and suspends the output of the shift data on the basis of a shift code succeedingly inputted in a state that the shift data is outputted from the host control unit or a slave control unit on the upstream side; and a judging means disposed in each of the slave control units for judging to be in a serial-communicatable state with the host control unit when the shift code is inputted thereto in a state that the shift data is outputted from the control unit on the upstream side.

In this case, no shift clock line is required, and the structure of hardware is simplified as much.

Explain above, according to one aspect of the present invention, there is provided a communication method for a spinning machine having a host control unit and a plurality of slave control units, wherein a shift data line sequentially connects the host control unit and the plurality of slave control units in the form of a link, a serial communication line that connects the host control unit and the respective slave control units by a bus; and wherein each of the respective slave control units outputs shift data to the slave control unit or the host control unit on the downstream side on the basis of a shift signal inputted through a signal line connected to the host control unit by a bus in a state that the shift data is outputted from the host control unit or the slave control unit, on the upstream side, connected through the shift data line, and judges to be in a state of serial-communicatable with the host control unit and conducts serial communication with the host control unit. For that reason, unless the individual addresses are set on the slave control units, the host control unit can selectively conduct serial communication with the individual slave control units.

According to another aspect of the present invention, there is provided a communication control unit for a spinning machine having a host control unit and a plurality of slave control units which comprises a shift data line connecting the host control unit and the plurality of slave control units in the form of a link; a shift clock line connecting the host control unit and the plurality of slave control units by a bus; a serial communication line connecting the host control unit and the plurality of slave control units by a bus; a shift clock output means disposed in the host control unit; a host shift data output means disposed in the host control unit for outputting the shift data to one of the plurality of slave control units; a slave shift data output means disposed in each of the slave control units for outputting the shift data to the slave control unit or the host control unit on the downstream side on the basis of the shift clock signal inputted through the shift clock line in a state that the shift data is outputted from the host control unit or the slave control unit on the upstream side, and suspends the output of the shift data on the basis of the shift clock signal succeedingly inputted; a judging means disposed in each of the slave control units for judging whether a respective slave contorl unit is in serial-communicatable with the host control unit if the shift clock signal is inputted when the shift data is outputted from the control unit on the upstream side. For that reason, the structure of the device that implements the present invention is simplified.

According to still another aspect of the present invention, there is provided a communication control unit for a spinning machine, wherein each of the slave control units comprises a control unit disposed in each of spindles of a spinning frame. For that reason, in the spinning frame which is large in the number of spindles, appropriate control can be conducted while grasping the states of the respective spindles.

According to a further aspect of the present invention, there is provided a communication control unit for a spinning machine, wherein the spinning frame comprises a single-spindle drive type spinning frame in which a spindle drive motor is disposed independently in each of the spindles. For that reason, in the single-spindle drive type spinning frame complicated in control, appropriate control can be conducted while grasping the states of the respective spindles.

According to a still further aspect of the present invention, there is provided a communication control unit for a spinning machine, wherein the spinning frame is designed such that multiple spinning units are divided into a plurality of groups, and a sub-control unit is disposed in each group, and the sub-control unit in each group communicates with the slave control unit disposed in each of the spindles as the host control unit, and the main control unit communicates with the respective sub-control units. For that reason, in the single-spindle drive type spinning frame which is large in the number of spindles, because the main control unit communicates with the respective sub-control units, and the sub-control unit disposed in each group communicates with the slave control units in each the group, the states of the respective spindles can be grasped in a short time.

The foregoing description of the preferred embodiments of the invention is presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A communication method for a spinning machine having a host control unit (3, 19) and a plurality of slave control units (2), wherein a shift data line (4) sequentially connects said host control unit(3, 19) and said plurality of slave control units (2) in the form of a link, a serial communication line (9) that connects said host control unit(3, 19) and said respective slave control units (2) by a bus; and
wherein each of said respective slave control units (2) outputs shift data to the slave control unit or the host control unit (3, 19) on the downstream side on the basis of a shift signal inputted through a signal line (8,9) connected to the host control unit (3, 19) by a bus in a state that the shift data is outputted from the host control unit (3, 19) or the slave control unit (2), on the upstream side, connected through said shift data line (4), and judges to be in a state of serial-communicatable with the host control unit (3, 19) and conducts serial communication with the host control unit (3, 19).

2. A communication control unit for a spinning machine having a host control unit (3, 19) and a plurality of slave control units (2), comprising:
a shift data line (4) connecting said host control unit (3, 19) and said plurality of slave control units (2) in the form of a link;
a shift clock line (8) connecting said host control unit (3, 19) and said plurality of slave control units (2) by a bus;
a serial communication line (9) connecting said host control unit (3, 19) and said plurality of slave control units (2) by a bus;
a shift clock output means (10, 22) disposed in said host control unit (3, 19);
a host shift data output means (10, 22) disposed in said host control unit (3, 19) for outputting the shift data to one of said plurality of slave control units (2);
a slave shift data output means (15) disposed in each of said slave control units (2) for outputting the shift data to the slave control unit (2) or the host control unit (3, 19) on the downstream side on the basis of the shift clock signal inputted through said shift clock line (8) in a state that the shift data is outputted from the host control unit (3, 19) or the slave control unit (2) on the upstream side, and suspends the output of the shift data on the basis of the shift clock signal succeedingly inputted; and
a judging means (15) disposed in each of said slave control units (2) for judging whether a respective slave contorl unit is in serial-communicatable with the host control unit (3, 19) if said shift clock signal is inputted when the shift data is outputted from said control unit on the upstream side.

3. A communication control unit for a spinning machine having a host control unit (3) and a plurality of slave control units (2), comprising:
a shift data line (4) connecting said host control unit (3) and said plurality of slave control units (2) in the form of a link;
a serial communication line (9) connecting said host control unit (3) and said plurality of slave control units (2) by a bus;
a host shift data output means (10) disposed in said host control unit (3);
a shift code giving means (10) disposed in each of said host control unit (3) for giving a shift code (SC) to the initial portion of transmission data transmitted to said serial communication line (9);
a slave shift data output means (15) disposed in each of said slave control units (2) for outputting the shift data to the slave control unit (2) or the host control unit (3) on the downstream side on the basis of the shift code (SC) inputted through said serial communication line (9) in a state that the shift data is outputted from the host control unit (3) or the slave control unit (2) on the upstream side, and suspends the output of the shift data on the basis of the shift code (SC) succeedingly inputted; and
a judging means (15) disposed in each of said slave control units (2) for judging to be in a state of serial-communicatable with the host control unit (3) when said judging means inputs the shift code in a state that the shift data is outputted from said control unit on the upstream side.

4. A communication control unit for a spinning machine as claimed in claim 2 or 3, wherein each of said slave control units (2) comprises a control unit disposed in each of spindles of a spinning frame.

5. A communication control unit for a spinning machine as claimed in claim 4, wherein said spinning frame comprises a single-spindle drive type spinning frame in which a spindle drive motor is disposed independently in each of the spindles.

6. A communication control unit for a spinning machine as claimed in claim 4 or 5, wherein said spinning frame is designed such that multiple spinning units are divided into a plurality of groups, and a sub-control unit (19) is disposed in each group, and the sub-control unit (19) in each group communicates with the slave control unit (2) disposed in each of the spindles as said host control unit (3), and the main control unit (3) communicates with the respective sub-control units (19).

7. A communication control unit for a spinning machine as claimed in any one of claims 2 to 6, wherein said shift data line (4) comprises a cable having connectors (6) which are disposed at given intervals and connected to the terminals of shift data input/output ports (5) disposed in the respective slave control units (2).
